# EUROPEAN PATENT APPLICATION

(11) **EP 1 584 977 A1**
(43) Date of publication of application: **12.10.2005**
(21) Application number: 04008057.4
(22) Date of filing: 02.04.2004
(51) Int. Cl.: G03B 17/18, G03B 17/40, G03B 15/05

(54) **Indicating apparatus combined with flash**

(71) Applicant: Aiptek International Inc., Taiwan (TW)
(72) Inventor: Huang, Flora, Banciao City Taipei County 220 (TW)
(74) Representative: Winkler, Andreas Fritz Ernst

(57) **Abstract**

An indicating apparatus combined with flash is disclosed in this invention. The indicating apparatus includes at least one LED and a light guide rod. The LED is employed for indicating, and the light guide rod, around the flash, is employed to guide the light emitted from the LED.

## Description

### BACKGROUND OF THE INVENTION

### 1. Field of the Invention

This invention relates to an indicating apparatus, and more particularly to an indicating apparatus applied to an image capture apparatus.

### 2. Description of the Prior Art

For the skilled in the arts, the conventional image capture apparatuses having an indicating LED provide time indicating function. For example, when users start the self-timer, the users can know a remaining time to shoot with a blinking frequency of the LED. In general, the remaining time is shorter and the blinking frequency is higher. Some digital cameras employ the LED as a focus aid light. When the object is too close to the digital camera or the ambient light is not enough, the LED focus aid light will emit a light to the object to increase the illumination for the object and so the digital camera can focus accurately.

Generally, the flash is the most common artificial light for photographer. Recently, the flash assembled on the image capture apparatus can not continuously, instantly operate due to the flash need a charging time when the user hopes to continuously shoot under low light environment. Therefore, an LED indicating apparatus is assembled on the image capture apparatus for indicating the charging condition of the flash or being as a self-timer indicating light. The aforementioned LED indicating apparatus has only time indicating function with frequently blinking, and the user knows the condition of the image capture apparatus according to only the blinking frequency. Therefore, the LED indicating apparatus only displays simple and easy indication.

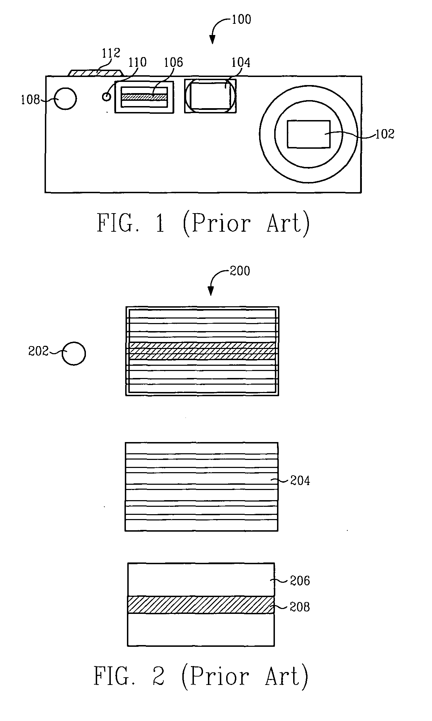

FIG. 1 shows a schematic diagram of the conventional image capture apparatus. A camera 100 comprises basic elements of a lens 102, an optical viewfinder 104, a flash module 106, a remote control sensor 108, an LED indicating apparatus 110, and a shutter button 112. The LED indicating apparatus 110 and the flash module 106 are different portions, and the LED indicating apparatus 110 has indicating function with only blinking frequency. Hence, the LED indicating apparatus 110 can not satisfy the indicating requirement under that the camera needs more than two indications.

The LED indicating apparatus 110 is not connected with any control apparatus, so the user can control or adjust the indicating function thereof. The user is compelled to use the single indicating function. The indicating function is too monotonous for some users.

A performance of the flash module is developed rapidly, from manual adjusting, automatic adjusting, to automatic flash exposing. In addition, the LED is employed as an indicating light and assembled on a position of a front cover in the camera, different from the assembled position of the flash module. The conventional flash module only provides the illumination for shooting, and has no additional functions. Accordingly, the conventional flash module and LED indicating apparatus is simpler on design. As shown in FIG. 2, a flash module 200 comprises a lamp screen 204, a reflecting mirror 206, a lamp module 208, and an LED indicating apparatus 202. The flash module 200 can be electrically connected with the LED indicating apparatus 202 through a circuit, so the LED indicating apparatus 202 can indicate the condition of the flash module 200, such as charging condition. Alternatively, the LED indicating apparatus 202 can be electrically connected with a self-timer to indicate the remaining time to shoot, so the user can expect the shooting time point and get a preferable picture. The aforementioned functions satisfy only common requirements, and the user easily feels that the functions are boring.

### SUMMARY OF THE INVENTION

One of objectives of the present invention is to provide an LED indicating apparatus combined with a light guide rod. The present invention further provides an indicating apparatus applied for indicating the condition of the image capture apparatus.

Another objective of present invention is to provide an indicating apparatus formed by a plurality of LEDs that the blinking frequency of each of LED is determined according to different indicating mode.

Still another objective of present invention is to make user know the condition of the image capture apparatus, and further provide a mode selection function of the indicating apparatus.

Another objective of present invention is to provide a system for updating the indicating mode. The updating system is an electrical apparatus, and users can update the indicating mode with various indicating modes provided by the manufacturer, through the signal input/output ports of the electrical apparatus.

The present invention employs the LED indicating apparatus round the flash module to provide a pre-flash function. The pre-flash function of the LED indicating apparatus is employed to shrink subjects' pupils for avoiding red-eye reaction. Moreover, using the pre-flash function of the LED indicating apparatus can reduce the usage times of the flash and extend the life of the flash.

The present invention also provides users to set indicating modes as user's wish, and furthermore the indicating mode of the LED can be changed through an electrical apparatus.

As aforementioned, the present invention provides an indicating apparatus combined with a flash. The indicating apparatus provides various indicating functions to make the user know the operating condition of the image capture apparatus. The indicating apparatus combined with a flash comprises at least one LED, a flash module, and a light guide rod. The LED provides indicating and pre-flash function. The light guide rod round the flash module guides a light emitted by the LED there-into. The flash module comprises a lamp screen and a lamp module. The lamp module has a lamp and a curved mirror. The light guide rod mentioned above protects the flash module from electro-static discharge (ESD) and an external force.

The present invention also provides an image capture apparatus. The image capture apparatus comprises a body, at least one LED on the body, a light guide rod, and a flash module on said body. The LED provides an indicating function to make the user know the operating condition of the image capture apparatus. The light guide rod guides a light emitted by the LED there-into. The light guide rod protects the flash module from ESD and an external force.

The present invention still provides an indicating apparatus combined with a flash. The indicating apparatus comprises a flash module and at least one LED. The LED around the flash module provides an illumination for shooting and an indicating function.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein:
FIG. 1 is a schematic diagram of an arrangement of a flash and an LED in a conventional digital camera;
FIG. 2 is a schematic diagram of a flash module and an LED assembled nearby the flash module;
FIG. 3 is a block diagram of a light detector and an indicating apparatus of a flash module and LEDs according to the present invention;
FIG. 4 is a schematic diagram of a camera and an indicating apparatus combined with a flash module according to the present invention;
FIG. 5 is a schematic diagram of an indicating apparatus comprising a flash module, an LED, and a light guide rod according to the present invention;
FIG. 6 is a schematic diagram of an indicating apparatus comprising a plurality of LEDs surrounding a flash module according to the present invention;
FIG. 7 is an operating flowchart of an indicating apparatus for an image capture apparatus according to the present invention; and
FIG. 8 is an operating flowchart of an indicating apparatus according to the present invention.

### DESCRIPTION OF THE PREFERRED EMBODIMENT

Some sample embodiments of the invention will now be described in greater detail with the accompanying drawings.

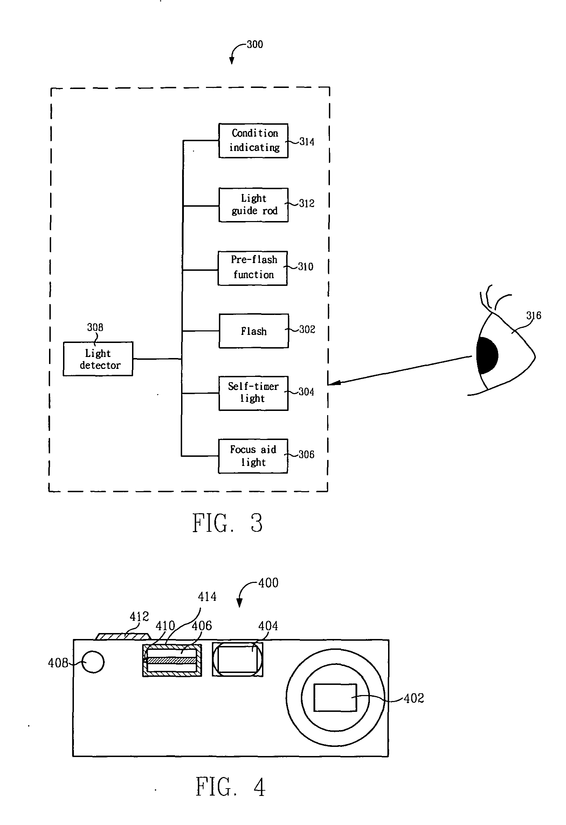

FIG. 3 is a block diagram 300 of a light detector and an indicating apparatus comprising a flash module and LEDs according to the present invention, which comprising a flash 302, a self-timer light 304, a focus aid light 306, a light detector 308, a pre-flash function 310, a light guide rod 312, and an image capture apparatus condition indicating 314. The flash module 302 mainly provides an illumination for shooting. The self-timer light 304 is employed to make users expect the shooting time point when the users start the self-timer mode, so the users can get a preferable picture. The focus aid light 306 provides a proper illumination to aid lens in auto-focusing under an insufficient brightness condition. The light detector 308 detects if the brightness of the environment is sufficient, and determines if the flash and the indicating mode need work. The pre-flash function 310 is employed to avoid red-eye reaction due to shooting with a flash under an insufficient brightness condition. The present invention employs the LED indicating apparatus to provide the pre-flash function, and subjecys' pupils will shrink resulted from the pre-flashing light and to reducing the light reflected by the pupils. The light guide rod 312 is assembled round the flash 302 to guide a light emitted by the LEDs to become a surround light source that is different from a conventional indicating mode of LEDs. The image capture apparatus condition indicating 314 makes users know the operating condition of the image capture apparatus for helping the quality of shot picture.

The self-timer light 304, the focus aid light 306, the pre-flash function 310, the light guide rod 312, and the image capture apparatus condition indicating 314 can be integrated into to achieve the aforementioned functions.

FIG. 4 is a schematic diagram of an image capture apparatus according to the present invention. The camera 400 comprises a lens 402, a optical viewfinder 404, a flash module 406, a remote control sensor 408, an LED indicating apparatus 410, and a shutter button 412, and a light guide rod 414. The users can employ the LED indicating apparatus 410 comprising LEDs and a light guide rod to aid in focusing or being as a self-timer indicating light. The LED can be any color as white, blue, red, green, etc.

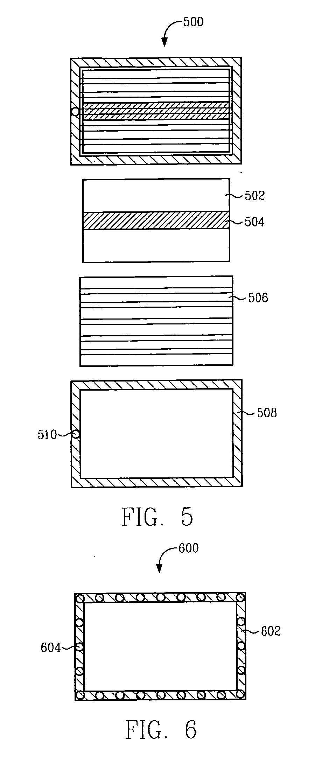

Referring to FIG. 5, it is a schematic diagram of one preferred embodiment of an indicating apparatus combined with a flash module according to the present invention. The indicating apparatus 500 comprises a lamp screen 506, a lamp module, a light guide rod 508, and an LED 510. The lamp module comprises a lamp 504 and a curved reflecting mirror 502. The lamp 504 is employed as a light source and the reflecting mirror 502 is employed to reflect a light, which is emitted by the lamp 504. The lamp 504 can be a tube that is full of Xenon (Xe) and flashed by applying a current with high voltage. Alternatively, white LEDs may be as the light source of the flash in the present invention. The LED 510 and the light guide rod 508 are combined with each other to become an indicating apparatus.

In addition, the LED 510 has an indicating function that indicates different operating conditions with different blinking frequencies before shooting. For example, rapidly blinking LED indicates that the shutter will work as starting self-timer; when the flash is processed with charging, the LED is constantly lighting, and when charged completely, the LED will turn to off. The LED can be white, blue, red, green, or the combination thereof. Moreover, the light guide rod 508 is round the flash module 500 to guide a light emitted by the LED to become a surround light source. The light guide rod 508 also protects the flash module from electro-static discharge (ESD) and an external force.

The light guide rod 508 can be a high transmittance material, such as UL94V-0, transparent resin, glass, or the combination thereof. The transparent resin is acrylic resin, polycarbonate resin, or epoxy resin.

FIG. 6 is a schematic diagram of another preferred embodiment of an indicating apparatus 600 comprising a plurality of LEDs 604 and a external protective transparent tube 602 according to the present invention. The indicating apparatus 600 can be combined with an electrical apparatus for updating indicating modes thereof as user's wish. The user can update the indicating modes with various indicating modes provided by the manufacturer through the signal input/output ports of the electrical apparatus. For example, the indicating modes may be a circle round mode with one or more lighting LED(s).

The indicating apparatus 600 can provide a pre-flash function. The pre-flash function is employed to shrink subjects' pupils for reducing red-eye reaction due to the flashing light is reflected by the pupils. Moreover, the present invention can reduce the usage times of the flash due to replacing the flash with the indicating apparatus in pre-flash function, so the life of the flash can extend. The indicating apparatus is also employed as a focus aid light by providing a proper light to aid the image capture apparatus in auto-focusing under an insufficient brightness environment.

The LEDs 604 can be white LEDs, blue LEDs, red LEDs, green LEDs, or the combination thereof. The user can set different indicating modes corresponding to different operating conditions of an image capture apparatus. For example, the present invention can use the white LEDs to provide a proper illumination when using pre-flash function; the present invention can set different blinking frequencies according to operating conditions. For example, a set mode is a circle round mode with one lighting LED, the LED may be red or other color, or a set mode is to turn on/off LEDs in sequence, so the LEDs can display a lighting sequence with different color LEDs and each of the LEDs has different blinking frequency, even display an image.

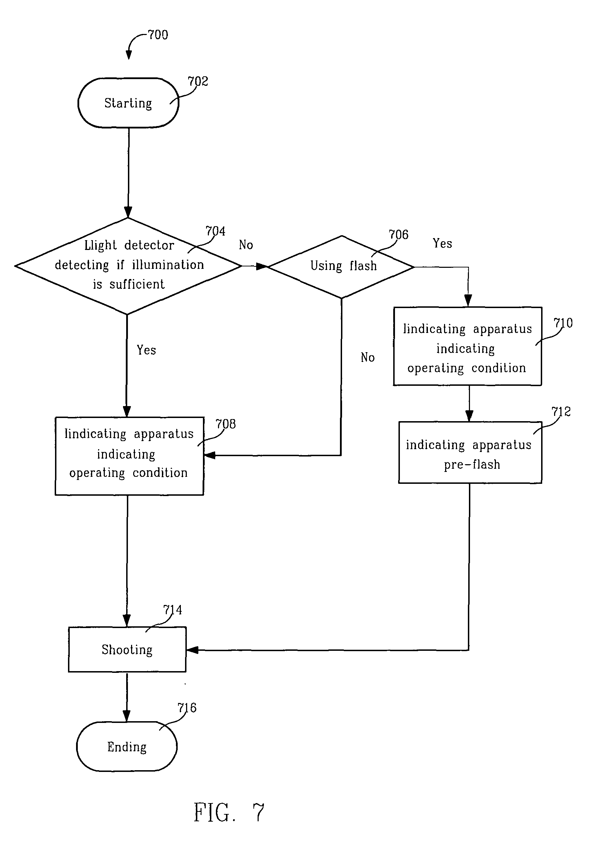

The present invention also provides a method for operating the indicating apparatus of the image capture apparatus. FIG. 7 shows the operating flowchart 700 comprising the steps in following. Step 702 is starting. Step 704 is that a light detector detects if the illumination is sufficient and determines to use the flash according to shooting requirement. Step 706 is determining if the flash works. Step 710 is that the indicating apparatus indicates the operating condition of the image capture apparatus when the flash is determined to work. Step 712 is that the indicating apparatus provides pre-flash function. Step 714 is shooting, and Step 716 is ending. Due to an user may take a picture by different exposure time according to shooting conditions, the user can use or not use the flash with Step 706. Step 708 is that the indicating apparatus indicates the operating condition of the image capture apparatus when the flash is determined not to work. Then, the user shoot and end the operating (Step 714 and 716).

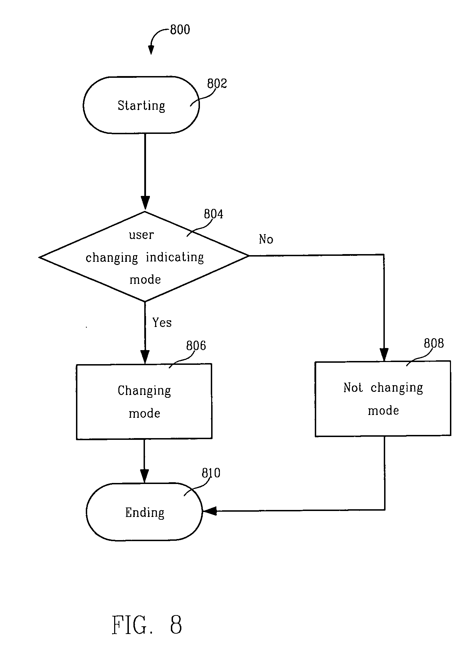

The present invention still also provides a method for operating the indicating apparatus. FIG. 8 is the operating flowchart 800 comprising the steps in following. Step 802 is starting. Step 804 is if a user changes an indicating mode. Step 806 is changing the indicating mode and Step 808 is not changing the indicating mode. Changing the indicating mode has two changing methods. One of them is that the user updates with various indicating modes provided by the manufacturer through the signal input/output port of the electrical apparatus. The other is that the user resets the inbuilt indicating mode of the electrical apparatus. Step 810 is ending.

As aforementioned, the advantages of the present invention are described. The present invention provides various indicating modes for users, and provides a pre-flash function to reduce the usage times of the flash for extending the life of the flash and reducing the power consumption. Therefore, the present invention also extends the sustaining time of battery for the image capture apparatus for solving the problem of battery sustaining time.

Although specific embodiments have been illustrated and described, it will be obvious to those skilled in the art that various modifications may be made without departing from what is intended to be limited solely by the appended claims.

The features disclosed in the foregoing description, in the claims and/or in the accompanying drawings may, both separately and in any combination thereof, be material for realising the invention in diverse forms thereof.

## Claims

1. A indicating apparatus combined with a flash, comprising:
at least one LED for providing an indicating function;
a flash module; and
a light guide rod round said flash module, said light guide rod guiding a light emitted by said at least one LED;
wherein said light guide rod protects said flash module from ESD and an external force.

2. The indicating apparatus in claim 1, further comprising an electrical apparatus for controlling or adjusting an indicating condition of said at least one LED.

3. The indicating apparatus in claim 2, wherein indicating modes is changed by said electrical apparatus.

4. The indicating apparatus in claim 1, wherein a material of said light guide rod is a high transmittance material.

5. The indicating apparatus in claim 1, wherein said indicating apparatus is assembled in a digital camera for indicating operating conditions of the digital camera by varying a color or an amount of said at least one LED.
